# FASCICULE DE BREVET EUROPEEN

(11) **EP 0 493 272 B1**
(45) Date de publication et mention de la délivrance du brevet: **06.03.1996**
(21) Numéro de dépôt: 91420449.0
(22) Date de dépôt: 13.12.1991
(51) Int. Cl.: H01H 71/74, H01H 71/12

(54) **Disjoncteur comportant une carte d'interface avec un déclencheur**
Schutzschalter mit einer Schnittstellenkarte für einen Auslöser
Circuit breaker containing an interface card with a trip device

(30) Priorité: 26.12.1990 FR 9016403
(43) Date de publication de la demande: 01.07.1992
(73) Titulaire: SCHNEIDER ELECTRIC SA, F-92100 Boulogne-Billancourt (FR)
(72) Inventeur: Corcoles, Vincent, F-38050 Grenoble Cedex (FR); Tedeschi, Christian, F-38050 Grenoble Cedex (FR); Delvecchio, Alain, F-38050 Grenoble Cedex (FR); Fraisse, Didier, F-38050 Grenoble Cedex (FR)
(74) Mandataire: Jouvray, Marie-Andrée

(56) Documents cités:
- FR-A- 2 583 569
- US-A- 4 181 389
- US-A- 4 649 455

## Description

L'invention concerne un disjoncteur comportant des moyens de mesure du courant traversant des conducteurs à protéger et destiné à coopérer avec un déclencheur électronique amovible standard comportant un circuit de traitement produisant un signal de déclenchement lorsque le courant mesuré dépasse des seuils de déclenchement prédéterminés. Un tel disjoncteur est décrit, par exemple, dans US-A-4 649 455 et dans FR-A-2 583 569.

Les disjoncteurs peuvent généralement être utilisés avec différents types de déclencheurs électroniques. Ceux-ci sont donc généralement amovibles et ne sont montés dans un disjoncteur que lors de l'installation de celui-ci. Les déclencheurs électroniques classiques assurent les fonctions de déclenchement long retard et/ou court retard et/ou instantané, et éventuellement une fonction de protection à la terre. Pour ces différentes fonctions, les seuils de déclenchement peuvent généralement être réglés par l'utilisateur. Il est également souhaitable que le déclencheur assure une fonction de déclenchement instantané, destinée à protéger le disjoncteur, dont le seuil est réglé en fonction du type et du calibre du disjoncteur de manière à s'adapter à la tenue électrodynamique du disjoncteur. Cette fonction de déclenchement instantané est classiquement réalisée au moyen d'un circuit de déclenchement analogique du déclencheur dont le seuil est réglé en usine sur le déclencheur, en fonction du disjoncteur auquel il est destiné. Dans les disjoncteurs actuels les transformateurs de courant, solidaires du disjoncteur, sont conçus de manière à fournir, au secondaire, un courant prédéterminé, typiquement 100mA, lorsqu'un courant nominal de valeur prédéterminée, par exemple 160A, 250A,400A ou 630A, parcourt leur enroulement primaire. Le circuit de traitement du déclencheur traite les signaux qui lui sont fournis par les transformateurs de courant sans tenir compte de la valeur du courant nominal, les seuils de déclenchement étant définis en valeur relative par rapport à ce courant nominal, au moins dans le cas des fonctions de courant nominal, au moins dans le cas des fonctions de déclenchement long retard, court retard et instantané. Par contre, dans certains cas le circuit de traitement doit connaître la valeur du courant nominal, notamment lorsque le déclencheur comporte des moyens d'affichage du courant parcourant les conducteurs à protéger, pour la communication avec un organe de surveillance déporté et, parfois, pour la protection terre. Jusqu'ici cette information est fournie en usine au déclencheur, en fonction du disjoncteur auquel il est destiné. Dans le cas de déclencheurs à microprocesseur ceci est classiquement réalisé au moyen d'un boîtier de personnalisation qui fournit, en usine, la valeur du courant nominal à une mémoire du microprocesseur.

Il est ainsi nécessaire, lors de la fabrication d'un déclencheur, de connaître à l'avance le type et/ou le calibre du disjoncteur dans lequel il doit être monté.

L'invention a pour but d'éliminer cet inconvénient.

Ce but est atteint par le fait que le disjoncteur selon l'invention comporte une carte d'interface, solidaire du disjoncteur, destinée à être connectée au déclencheur lors de la connexion de celui-ci dans le disjoncteur, la carte d'interface comportant des moyens représentifs du type et/ou du calibre du disjoncteur et comportant un connecteur de sortie auquel sont connectés lesdits moyens et destiné à être connecté à un organe de connexion complémentaire du déclencheur, l'organe de connexion complémentaire étant connecté au circuit de traitement du déclencheur, de manière à fournir au circuit de traitement une information représentative du type et/ou du calibre du disjoncteur.

La carte d'interface, qui tient compte du type et/ou du calibre du disjoncteur, est montée dans celui-ci lors de sa fabrication. Le déclencheur, quant à lui, est un déclencheur standard. Sa connexion avec le disjoncteur, et en particulier avec la carte d'interface de celui-ci, fournit au circuit de traitement une information représentative du type et/ou du calibre du disjoncteur.

Selon un premier développement de l'invention, les moyens représentatifs du type et/ou du calibre du disjoncteur comportent des moyens de réglage d'un seuil de déclenchement instantané en fonction du type et du calibre du disjoncteur.

Le déclencheur comporte de préférence un pont diviseur constitué d'au moins deux résistances pour fixer un seuil minimal de déclenchement instantané, et la carte d'interface comporte au moins une résistance adaptée au type et au calibre du disjoncteur, destinée à venir se connecter en parallèle sur l'une des résistances du pont diviseur lors de la connexion du déclencheur dans le disjoncteur.

Selon un mode de réalisation préférentiel, la carte d'interface est une carte standard comportant des résistances disposées en parallèle et dont les connexions au connecteur de sortie de la carte d'interface sont sélectivement interrompues en fonction du type et du calibre du disjoncteur. Il suffit alors d'avoir une carte d'interface standard qui est adaptée au disjoncteur lors de la fabrication de celui-ci. Cette adaptation est réalisée très simplement en interrompant un certain nombre de connexions reliant les résistances au connecteur.

Selon un second développement de l'invention, les moyens représentatifs du type et/ou du calibre du disjoncteur comportent des moyens représentatifs du courant nominal fourni par les moyens de mesure de courant, le déclencheur comportant des moyens pour appliquer au circuit de traitement des signaux représentatifs de la valeur dudit courant nominal lorsque le déclencheur est connecté dans le disjoncteur.

Les moyens représentatifs du courant nominal peuvent comporter une simple résistance ou bien une série de connexions électriques fournissant une information codée sous forme binaire.

Selon un autre développement de l'invention, la carte d'interface comporte une carte de circuit imprimé comportant des conducteurs reliant un nombre prédéterminé de bornes du connecteur de sortie de la carte d'interface à un nombre prédéterminé d'entrées de la carte d'interface, lesdites entrées étant connectées à des éléments du disjoncteur. Le connecteur de la carte d'interface est utilisé pour réaliser facilement la connexion du déclencheur avec d'autres éléments du disjoncteur, notamment les transformateurs de courant et une bobine de déclenchement. Ces éléments sont connectés à des entrées de la carte d'interface lors de la fabrication du disjoncteur et un seul connecteur, monté sur la carte d'interface, permet de réaliser toutes les connexions électriques nécessaires entre le déclencheur et le disjoncteur lors du montage du déclencheur dans le disjoncteur, tout en fournissant au déclencheur les informations dont il a besoin sur le type et/ou le calibre du disjoncteur.

D'autres avantages et caractéristiques ressortiront plus clairement de l'exposé qui va suivre d'un mode de réalisation particulier de l'invention, donné à titre d'exemple non limitatif et représenté aux dessins annexés sur lesquels:

La figure 1 représente, sous forme éclatée, un disjoncteur sans déclencheur.

La figure 2 représente, en vue de dessous, en perspective, un mode de réalisation particulier de la carte d'interface du disjoncteur selon la figure 1.

La figure 3 illustre, en vue de dessous, la connexion entre la carte d'interface selon la figure 2 et un déclencheur.

Les figures 4 à 6 représentent, sous forme de schéma bloc, les constituants du déclencheur et de trois variantes de la carte d'interface, ainsi que leurs connexions.

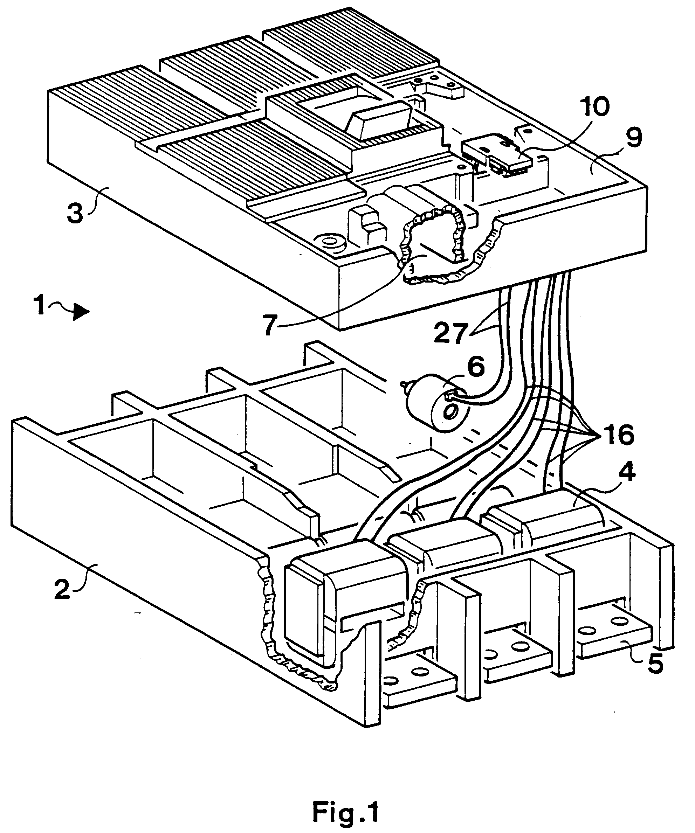

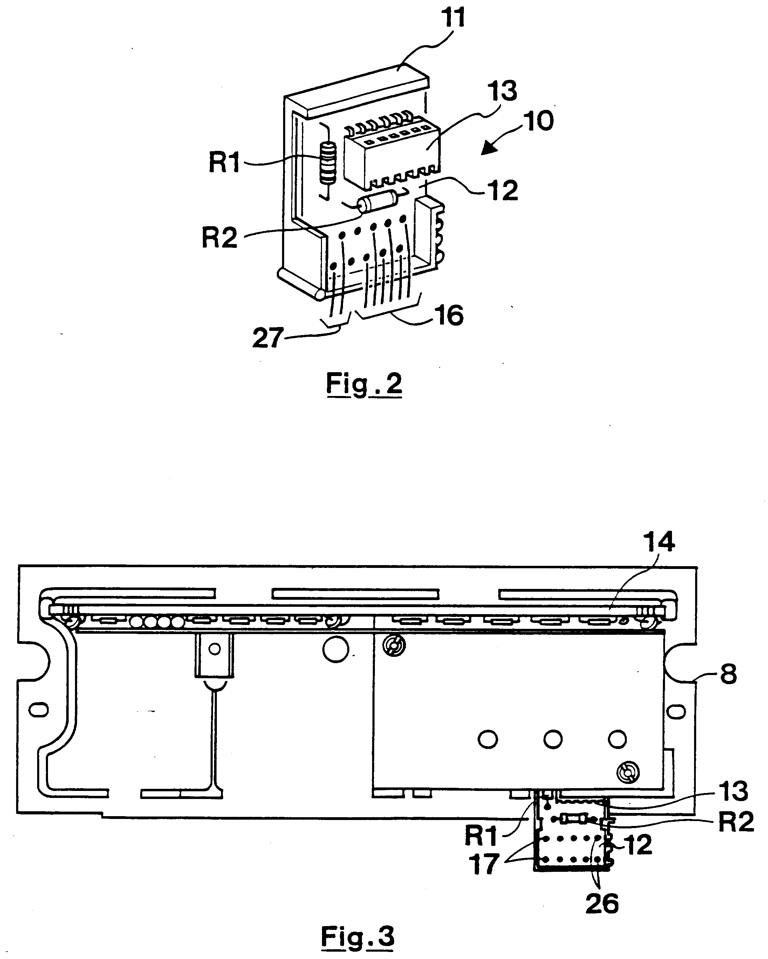

Sur la figure 1, seuls les éléments du disjoncteur nécessaires à la bonne compréhension de l'invention ont été représentés. Le disjoncteur 1 comporte une base 2 et un couvercle 3. Dans la base 2 sont disposés des transformateurs de courant 4. Certaines parois ont été arrachées pour mieux montrer la disposition des transformateurs de courant dans la base. Le disjoncteur représenté sur la figure 1 est un disjoncteur triphasé, comportant trois transformateurs de courant 4, disposés côte à côte. Des plages 5 d'amenée de courant, destinées à être connectées aux conducteurs du réseau à protéger, forment les primaires des transformateurs de courant. Une bobine de déclenchement 6 est disposée dans un logement 7 (dont une paroi est arrachée sur la figure) du couvercle 3. Un déclencheur électronique amovible 8 (figure 3) est destiné à s'adapter dans un logement 9 débouchant sur la face avant du couvercle 3.

Une carte d'interface 10 sert d'interface entre le disjoncteur 1 et le déclencheur 8. Cette carte, représentée plus en détail sur la figure 2, est solidaire du disjoncteur. Elle comporte un support 11 sur lequel est montée une carte de circuit imprimé 12. Sur la carte 12 est monté un connecteur 13 destiné à coopérer avec un connecteur complémentaire fixé sur une carte de circuit imprimé 14 du déclencheur 8. Lorsque le déclencheur amovible 8 est monté dans le logement 9 du disjoncteur, les connecteurs de la carte d'interface et du déclencheur assurent la connexion électrique entre le déclencheur et la carte d'interface 10.

La carte d'interface 10 représentée sur les figures 2 à 4 comporte des moyens de réglage du seuil de déclenchement instantané adapté au type et au calibre du disjoncteur. Dans le mode de réalisation particulier représenté, ces moyens sont constitués par deux résistances R1 et R2 disposées en parallèle.

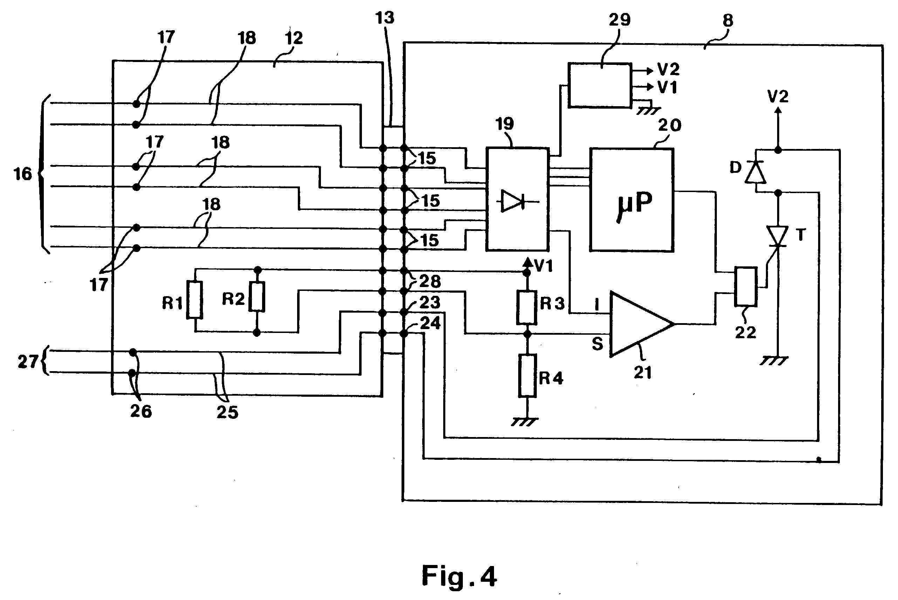

La figure 4 permet de mieux comprendre le rôle de la carte d'interface. Le déclencheur 8 reçoit, sur des entrées 15, les signaux de sortie des transformateurs du courant 4. Ces signaux lui sont transmis par l'intermédiaire de la carte d'interface 10. En effet les enroulements secondaires des transformateurs de courant sont connectés par des conducteurs 16 à des entrées 17 de la carte d'interface. Des conducteurs 18, formés sur la carte de circuit imprimé 12 de la carte d'interface, relient chacune de ces entrées 17 à une borne correspondante du connecteur 13, elle-même connectée, lorsque le déclencheur est mis en place dans le disjoncteur, à l'une des entrées 15. Ces entrées 15 du déclencheur sont reliées à un circuit de redressement 19. Celui-ci fournit à un circuit de traitement des signaux représentatifs des courants parcourant les conducteurs à protéger. Le circuit de traitement peut comporter un circuit 20, par exemple à microprocesseur, assurant les fonctions de déclenchement long retard, court retard, et/ou homopolaire du déclencheur. Il comporte également un circuit analogique 21 assurant une fonction de déclenchement instantané destiné à protéger le disjoncteur. Ce circuit 21 comporte essentiellement un circuit de comparaison entre une valeur de seuil S et un signal I, fourni par le circuit de redressement 19 et représentatif du courant maximum parcourant les conducteurs à protéger. Les signaux de déclenchement fournis par le circuit analogique 21 lorsque le courant maximum dépasse le seuil S, ou par le circuit 20, sont appliqués par une interface 22 à l'électrode de commande d'un commutateur électronique. Celui-ci est constitué par un thyristor T dans le mode de réalisation représenté.La gâchette du thyristor est connectée à la sortie de l'interface 22. Sa source est connectée à la masse et son drain est connecté à une borne d'entrée 23 du connecteur du déclencheur. Une autre borne d'entrée 24 du connecteur du déclencheur est connectée à une tension d'alimentation V2.Une diode D, normalement polarisée en inverse, est connectée entre les bornes 23 et 24. Les bornes 23 et 24 sont connectées à des bornes correspondantes du connecteur 13 de la carte d'interface 10, elles-même reliées par des conducteurs 25 à des entrées 26 de la carte d'interface. Ces entrées 26 sont connectées par des conducteurs 27 à la bobine de déclenchement 6.

Le seuil S est obtenu par un diviseur de tension. Sur la figure 4, ce diviseur de tension est constitué par deux résistances R3 et R4 disposées en série entre une tension d'alimentation V1 et la masse. Les résistances R1 et R2 de la carte d'interface sont connectées, en parallèle, à deux bornes du connecteur 13 associées à deux bornes d'entrée 28 du déclencheur, elles-mêmes connectées aux bornes de la résistance R3.

Sur la figure 4, les résistances R1,R2 et R3 sont branchées en parallèle et définissent avec la résistance R4, un seuil S. Ce seuil peut facilement être modifié. En effet, si l'on élimine l'une des résistances R1 ou R2, le seuil diminue. Avec deux résistances R1 et R2 sur la carte d'interface, il est facile d'obtenir quatre valeurs différentes du seuil, à savoir une valeur maximale lorsque R1 et R2 sont toutes deux présentes, une valeur minimale en l'absence de R1 et R2, et deux valeurs intermédiaires, une première lorsque R1 est déconnectée et une seconde lorsque R2 est déconnectée. La déconnexion s'effectue, par exemple, par interruption de la connexion entre la résistance considéré et une des bornes associée du connecteur 13 de l'interface. Ceci peut, par exemple, être réalisé en coupant les pattes de la résistance considérée.

Bien entendu l'invention n'est pas limitée à une carte d'interface comportant deux résistances en parallèle. Il est en particulier possible de prévoir un plus grand nombre de résistances, de manière à augmenter le nombre de valeurs de seuils intermédiaires disponibles. L'une des résistances peut être constituée par une portion de conducteur servant de shunt à la résistance R3, de manière à définir un seuil maximum plus élevé. Il est également possible de mettre deux ou plusieurs résistances en série et non en parallèle sur la carte d'interface et de court-circuiter les résistances non désirées.

Dans le mode de réalisation représenté à la figure 4, les tensions V1 et V2 sont fournies par un circuit d'alimentation 29 lui même alimenté par le circuit de redressement 19. Bien entendu,l'invention n'est pas limitée à un déclencheur à propre courant de ce type, mais s'applique à tout type de déclencheur dans lequel un seuil de déclenchement instantané minimum est défini dans le déclencheur, et peut être modifié par connexion de la carte d'interface.

Le même principe est applicable au seuil de déclenchement instantané à la fermeture (DINF).

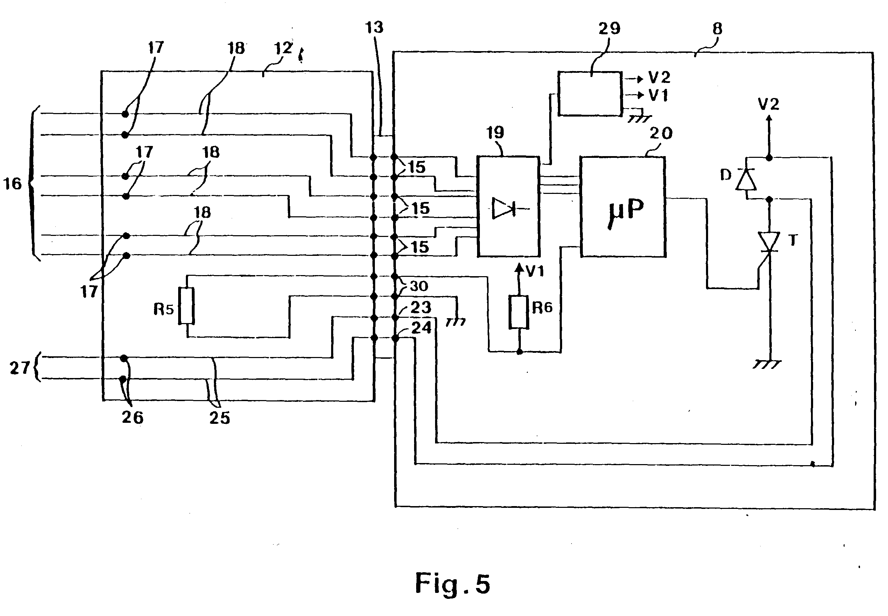

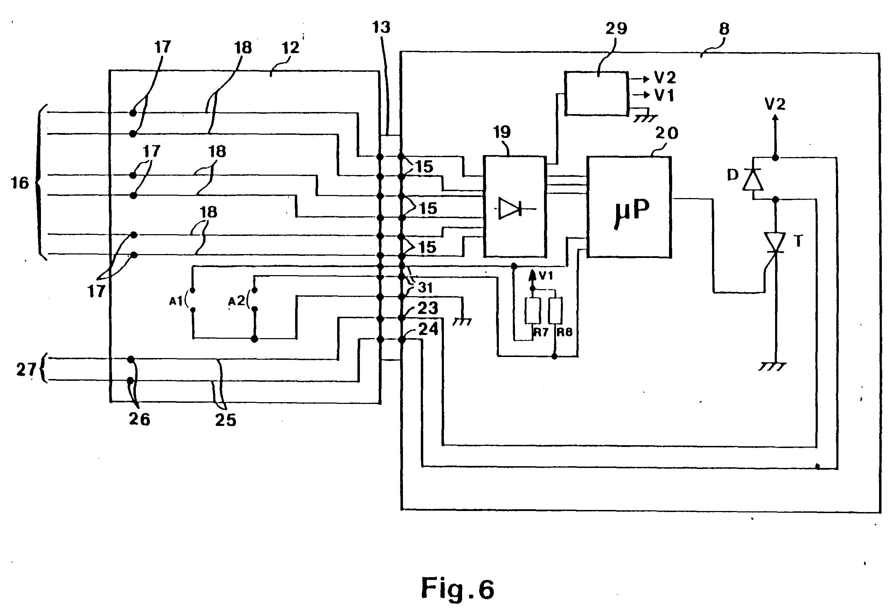

La carte d'interface représentée sur les figures 5 et 6 permet de fournir au déclencheur une information représentative du courant nominal des transformateurs de courant (4).

Dans le mode de réalisation représenté sur la figure 5, la carte d'interface comporte une résistance R5 dont la valeur est représentative de ce courant nominal. La résistance est connectée entre deux bornes du connecteur 13 associées à deux bornes d'entrée 30 du déclencheur. L'une des bornes 30 est connectée à la masse tandis que l'autre borne 30 est connectée, par l'intermédiaire d'une résistance R6, de valeur prédéterminée, à une tension d'alimentation prédéterminée, par exemple V1. Les résistances R5 et R6 constituent ainsi un pont diviseur dont la tension au point milieu dépend de la valeur de la résistance R5, donc de la valeur du courant nominal. Cette tension au point milieu du pont diviseur est appliquée au circuit de traitement 20. Celui-ci comporte des moyens pour décoder cette information et utilise cette valeur notamment pour le calcul des courants mesurés par les transformateurs de courant et éventuellement l'affichage des valeurs des courants.

La résistance R5 pourrait éventuellement être remplacée par une impédance, dont la valeur, représentative du courant nominal, est interprétée par le déclencheur.

La figure 6 illustre un autre mode de réalisation,dans lequel la carte d'interface fournit au déclencheur une information représentative du courant nominal des transformateurs de courant sous forme codée binaire. Un premier cavalier A1 est disposé entre deux bornes du connecteur 13 de l'interface, un second cavalier A2 étant disposé entre l'une de ces bornes et une autre borne du connecteur 13. Les trois bornes sont associées à des bornes 31 du déclencheur.La borne 31 commune est connectée à la masse, les deux autres bornes 31 étant respectivement connectées par des résistances R7 et R8 à la tension V1 et à des entrées du circuit de traitement 20. Ces entrées sont respectivement au niveau logique 0 lorsque le cavalier correspondant relie à la masse la borne 31 associée,et au niveau logique 1 lorsque le cavalier est retiré. Deux cavaliers A1 et A2 permettent de coder quatre valeurs de courant nominal. Bien entendu le circuit de traitement 20 comporte, par exemple sous forme d'une table mise en mémoire, des moyens de décoder cette information et d'en déduire la valeur correspondante du courant nominal. Le nombre de cavaliers est adapté au nombre de transformateurs de courant de calibre différent susceptibles d'être associés à un même déclencheur standard. Les cavaliers peuvent être remplacés par tout autre type de connexion électrique sélective, par exemple par des micro-interrupteurs.

Pour ne pas surcharger inutilement les figures, la carte d'interface et le déclencheur de la figure 4 ne comportent pas les moyens permettant au déclencheur de connaître la valeur du courant nominal, et, réciproquement, les figures 5 et 6 ne comportent pas les moyens permettant le réglage du seuil de déclenchement instantané. Il est cependant bien évident que ces deux types de moyens sont de préférence combinés sur une même carte d'interface, le déclencheur standard comportant des moyens d'interprétation des informations relatives aussi bien au courant nominal qu'au seuil de déclenchement instantané.

## Revendications

1. Disjoncteur comportant des moyens (4) de mesure du courant traversant des conducteurs à protéger et destiné à coopérer avec un déclencheur électronique amovible standard (8) comportant un circuit de traitement produisant un signal de déclenchement lorsque le courant mesuré dépasse des seuils de déclenchement prédéterminés, disjoncteur caractérisé en ce qu'il comporte une carte d'interface (10), solidaire du disjoncteur, destinée à être connectée au déclencheur (8) lors de la connexion de celui-ci dans le disjoncteur, la carte d'interface (10) comportant des moyens (R1,R2;R5;A1,A2 ) représentifs du type et/ou du calibre du disjoncteur et comportant un connecteur de sortie (13) auquel sont connectés lesdits moyens (R1,R2;R5;A1,A2) et destiné à être connecté à un organe de connexion complémentaire du déclencheur, l'organe de connexion complémentaire étant connecté au circuit de traitement du déclencheur, de manière à fournir au circuit de traitement une information représentative du type et/ou du calibre du disjoncteur.

2. Disjoncteur selon la revendication 1, caractérisé en ce que les moyens représentatifs du type et/ou du calibre du disjoncteur comportent des moyens (R1,R2) de réglage d'un seuil de déclenchement instantané en fonction du type et du calibre du disjoncteur.

3. Disjoncteur selon la revendication 2, caractérisé en ce que le déclencheur (8) comporte un pont diviseur constitué d'au moins deux résistances (R3,R4) pour fixer un seuil minimal de déclenchement instantané, et la carte d'interface (10) comporte au moins une résistance (R1,R2), adaptée au type et au calibre du disjoncteur, destinée à venir se connecter en parallèle sur l'une des résistances (R3) du pont diviseur lors de la connexion du déclencheur dans le disjoncteur.

4. Disjoncteur selon la revendication 3, caractérisé en ce que la carte d'interface (10) comporte des résistances (R1,R2) disposées en parallèle et dont les connexions au connecteur (13) de sortie de la carte d'interface sont sélectivement interrompues en fonction du type et du calibre du disjoncteur.

5. Disjoncteur selon l'une quelconque des revendications 1 à 4, caractérisé en ce que les moyens représentatifs du type et/ou du calibre du disjoncteur comportent des moyens (R5;A1,A2) représentatifs du courant nominal fourni par les moyens (4) de mesure de courant, le déclencheur comportant des moyens (30,V1,R6;31,V1,R7,R8) pour appliquer au circuit de traitement (20) des signaux représentatifs de la valeur dudit courant nominal lorsque le déclencheur est connecté dans le disjoncteur.

6. Disjoncteur selon la revendication 5, caractérisé en ce que les moyens représentatifs du courant nominal comportent une résistance (R5).

7. Disjoncteur selon la revendication 5, caractérisé en ce que les moyens représentatifs du courant nominal fournissent une information codée sous forme binaire.

8. Disjoncteur selon la revendication 7, caractérisé en ce que les moyens représentatifs du courant nominal comportent une pluralité de connexions électriques sélectives (A1,A2) entre des bornes (31) du connecteur de sortie (13) de la carte d'interface (10).

9. Disjoncteur selon l'une quelconque des revendications 1 à 8, caractérisé en ce que la carte d'interface (10) comporte une carte de circuit imprimé (12) comportant des conducteurs (18,25) reliant un nombre prédéterminé de bornes du connecteur de sortie (13) de la carte d'interface à un nombre prédéterminé d'entrées (17,26) de la carte d'interface, lesdites entrées (17,26) étant connectées (16,27) à des éléments du disjoncteur (1).

10. Disjoncteur selon la revendication 9, caractérisé en ce que certaines entrées (17) de la carte d'interface (10) sont connectées aux sorties des moyens (4) de mesure de courant, deux autres entrées (26) de la carte d'interface (10) étant connectées aux extrémités d'une bobine de déclenchement (6) disposée dans le disjoncteur.

## Patentansprüche

1. Leistungsschalter, der Mittel (4) zur Messung des zu schützende Leiter durchfließenden Stroms aufweist und dazu dient, mit einem abnehmbaren elektronischen Standardauslöser (8) zusammenzuwirken, welcher eine Signalverarbeitungsschaltung umfaßt, die ein Auslösesignal erzeugt, wenn der gemessene Strom festgelegte Auslöse-Ansprechwerte überschreitet, dadurch gekennzeichnet, daß der Leistungsschalter eine fest mit ihm verbundene Adapterkarte (10) zum Anschluß an den Auslöser (8) bei dessen Verbindung mit dem Leistungsschalter aufweist, wobei die Adapterkarte (10) Mittel (R1, R2; R5; A1, A2) zur Abbildung der Bauart und/oder der Nenngröße des Leistungsschalters sowie einen Ausgangs-Steckverbinder (13) umfaßt, an den die genannten Mittel (R1, R2; R5; A1, A2) angeschlossen sind und der zur Verbindung mit einem zugeordneten Verbindungselement des Auslösers dient, das seinerseits mit der Signalverarbeitungsschaltung des Auslösers verbunden ist, so daß der Signalverarbeitungsschaltung eine die Bauart und/oder die Nenngröße des Leistungsschalters abbildende Information zugeführt wird.

2. Leistungsschalter nach Anspruch 1, dadurch gekennzeichnet, daß die Mittel zur Abbildung der Bauart und/oder der Nenngröße des Leistungsschalters Mittel (R1, R2) zur Einstellung eines an die Bauart und die Nenngröße des Leistungsschalters angepaßten Ansprechwerts für unverzögerte Auslösung umfassen.

3. Leistungsschalter nach Anspruch 2, dadurch gekennzeichnet, daß der Auslöser (8) einen Spannungsteiler mit mindestens zwei Widerständen (R3, R4) zur Einstellung eines Mindest-Ansprechwerts für unverzögerte Auslösung aufweist, und die Adapterkarte (10) mindestens einen, an die Bauart und die Nenngröße des Leistungsschalters angepaßten Widerstand (R1, R2) umfaßt, der dazu dient, beim Anschluß des Auslösers an den Leistungsschalter parallel zu einem der Widerstände (R3) des Spannungsteilers geschaltet zu werden.

4. Leistungsschalter nach Anspruch 3, dadurch gekennzeichnet, daß die Adapterkarte (10) parallelgeschaltete Widerstände (R1, R2) aufweist, deren Verbindungen mit dem Ausgangs-Steckverbinder (13) der Adapterkarte in Abhängigkeit von der Bauart und der Nenngröße des Leistungsschalters wahlweise unterbrochen werden.

5. Leistungsschalter nach irgendeinem der Ansprüche 1 bis 4, dadurch gekennzeichnet, daß die Mittel zur Abbildung der Bauart und/oder der Nenngröße des Leistungsschalters Mittel (R5, A1, A2) umfassen, die den von den Strommeßmitteln (4) gelieferten Nennstrom abbilden, wobei der Auslöser Mittel (30, V1, R6; 31, V1, R7, R8) aufweist, die dazu dienen, die Signalverarbeitungsschaltung (20) beim Anschluß des Auslösers an den Leistungsschalter mit Signalen zu beaufschlagen, die den Wert des genannten Nennstroms abbilden.

6. Leistungsschalter nach Anspruch 5, dadurch gekennzeichnet, daß die den Nennstrom abbildenden Mittel einen Widerstand (R5) umfassen.

7. Leistungsschalter nach Anspruch 5, dadurch gekennzeichnet, daß die den Nennstrom abbildenden Mittel ein kodiertes Binärsignal liefern.

8. Leistungsschalter nach Anspruch 7, dadurch gekennzeichnet, daß die den Nennstrom abbildenden Mittel zwischen den Klemmen (31) des Ausgangs-Steckverbinders (13) der Adapterkarte (10) mehrere umschaltbare elektrische Verbindungen (A1, A2) umfassen.

9. Leistungsschalter nach irgendeinem der Ansprüche 1 bis 8, dadurch gekennzeichnet, daß die Adpaterkarte (10) eine gedruckte Schaltung (12) mit Leitern (18, 25) umfaßt, die eine festgelegte Zahl von Klemmen des Ausgangs-Steckverbinders (13) der Adapterkarte mit einer festgelegten Zahl von Eingängen (17, 26) der Adapterkarte verbinden, wobei die genannten Eingänge (17, 26) mit Komponenten des Leistungsschalters (1) verbunden (16, 27) sind.

10. Leistungsschalter nach Anspruch 9, dadurch gekennzeichnet, daß bestimmte Eingänge (17) der Adapterkarte (10) an die Ausgänge der Strommeßmittel (4) und zwei weitere Eingänge (26) der Adapterkarte (10) an die Anschlußenden einer im Leistungsschalter angeordneten Auslösespule (6) angeschlossen sind.

## Claims

1. A circuit breaker comprising means (4) for measuring the current flowing in conductors to be protected and designed to cooperate with a standard removable electronic trip device (8) comprising a processing circuit producing a tripping signal when the measured current exceeds preset tripping thresholds, a circuit breaker characterized in that it comprises an interface card (10), securedly affixed to the circuit breaker, designed to be connected to the trip device (8) when the latter is connected in the circuit breaker, the interface card (10) comprising means (R1,R2;R5;A1,A2) representative of the circuit breaker type and/ or rating and comprising an output connector (13) to which said means (R1,R2;R5;A1,A2) are connected and designed to be connected to a complementary connecting device of the trip device, the complementary connecting device being connected to the trip device processing circuit so as to supply the processing circuit with information representative of the circuit breaker type and/or rating.

2. The circuit breaker according to claim 1, characterized in that the means representative of the circuit breaker type and/or rating comprise means (R1, R2) for adjusting an instantaneous tripping threshold according to the circuit breaker type and rating.

3. The circuit breaker according to claim 2, characterized in that the trip device (8) comprises a divider bridge formed by at least two resistances (R3, R4) to set a minimum instantaneous tripping threshold, and the interface card (10) comprises at least one resistance (R1, R2), adapted to suit the circuit breaker type and rating, designed to be connected in parallel to one of the divider bridge resistances (R3) when the trip device is connected in the circuit breaker.

4. The circuit breaker according to claim 3, characterized in that the interface card (10) comprises resistances (R1, R2) connected in parallel and whose connections to the interface card output connector (13) are selectively interrupted according to the circuit breaker type and rating.

5. The circuit breaker according to any one of the claims 1 to 4, characterized in that the means representative of the circuit breaker type and/or rating comprise means (R5;A1,A2) representative of the rated current supplied by the means (4) for measuring the current, the trip device comprising means (30,V1,R6; 31,V1,R7,R8) for applying to the processing circuit (20) signals representative of the value of said rated current when the trip device is connected in the circuit breaker.

6. The circuit breaker according to claim 5, characterized in that the means representative of the rated current comprise a resistance (R5).

7. The circuit breaker according to claim 5, characterized in that the means representative of the rated current supply information coded in binary form.

8. The circuit breaker according to claim 7, characterized in that the means representative of the rated current comprise a plurality of selective electrical connections (A1,A2) between terminals (31) of the output connector (13) of the interface card (10).

9. The circuit breaker according to any one of the claims 1 to 8, characterized in that the interface card (10) comprises a printed circuit card (12) comprising conductors (18, 25) connecting a preset number of terminals of the interface card output connector (13) to a preset number of interface card inputs (17, 26), said inputs (17, 26) being connected (16, 27) to components of the circuit breaker (1).

10. The circuit breaker according to claim 9, characterized in that certain inputs (17) of the interface card (10) are connected to the outputs of the means (4) for measuring the current, two other inputs (26) of the interface card (10) being connected to the ends of a trip coil (6) located in the circuit breaker.
